(19) **Europäisches Patentamt / European Patent Office / Office européen des brevets**

(11) **EP 3 964 852 A1**

(12) # EUROPEAN PATENT APPLICATION

(43) Date of publication:
**09.03.2022 Bulletin 2022/10**

(21) Application number: **20195174.6**

(22) Date of filing: **08.09.2020**

(51) International Patent Classification (IPC):
**G01S 5/14** (2006.01)      **G01S 5/02** (2010.01)
**G01S 5/00** (2006.01)

(52) Cooperative Patent Classification (CPC):
**G01S 5/14; G01S 5/0252; G01S 5/0294;**
G01S 5/0054; G01S 5/013; G01S 5/021;
G01S 5/0244

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ariadne Maps GmbH**
**85748 Garching (DE)**

(72) Inventors:
- **Pipelidis, Georgios**
  **81375 München (DE)**
- **Tsiamitros, Nikolaos**
  **80799 Munich (DE)**
- **Duc, Nam Le**
  **80339 Munich (DE)**
- **Mancabelli, Tobia**
  **82178 Puchheim (DE)**

(74) Representative: **Koplin, Moritz**
**Anne-Conway-Straße 1**
**28359 Bremen (DE)**

(54) **METHOD AND SYSTEM FOR PROVIDING A USER CARRYING A MOBILE DEVICE WITH NAVIGATION AND NAVIGATION SERVICES**

(57)      Provided is a system and a method for providing navigation services to a user carrying a mobile device. The method comprises assigning an internet protocol, IP, address to the mobile device, receiving an electromagnetic signal from the mobile device, retrieving, based on the received electromagnetic signal, a media access control, MAC, address of the mobile device, determining, based on the received electromagnetic signal, a position of the mobile device, combining the MAC address retrieved from the mobile device with the corresponding assigned IP address and sending the navigation data to the mobile device by addressing the navigation data to the identified IP address.

**Fig. 4**

EP 3 964 852 A1

**Description**

**FIELD**

The present invention relates to a system and a method for guiding a user carrying a mobile device inside an indoor environment.

**BACKGROUND**

Navigation based on Global Positioning System (GPS) is established and widely adopted for outdoor environments. In indoor environment, others solutions than GPS are required for navigation, because the GPS signal is not present in closed spaces or it is highly unreliable, since it tends to reflect on the walls, which leads to a constant overestimation of the distance and therefore results in an uncertainty radius which is too high to be trusted. In the last few years, several methods for indoor navigation have been developed. Typical solutions for indoor navigation are based on the utilization of an appropriate application and/or program. Mobile devices, such as smart phones, tablets, computers, smart watches and other computing devices, often include apposite applications and/or programs that provide interfaces through which users can access to services related to the navigation inside a building. For example, while a user is using a map application and/or a program on a mobile device, the map application and/or program can obtain map data for the current location and the surroundings of the mobile device from a map service. The map application and/or program can then provide various map related services to the user using the map data received from the map service. These applications allow a user to view a map of an area, location or venue in the proximity of the user. The user may select an area, location or venue and retrieve direction thereto. Typical map applications also allow a user to search for a place location and obtain directions to one or more search results. Navigation services are typically combined with localization and/or tracking technical solutions and systems, such that the position of the user can be updated approximately in real-time during the navigation itself. Common technical solutions for localization and/or tracking are based on the detection and elaboration of a signal coming from appropriate Beacons, iBeacons and in particular Bluetooth-Beacons and/or Bluetooth Low Energy (BLE) Beacons. Commonly, the position of the user is retrieved based on received signal strength indication (RSSI) and trilateration by detecting through the mobile device the signal emitted by said Beacons, iBeacons and Bluetooth Low Energy (BLE) Beacons. For the realization of these solutions, it is required that an application and/or program is installed and running on the mobile device. Indoor localization solutions based on the detection of the signal from WiFi-routers might also be applied in combination with navigation services. In particular, indoor localization through WiFi can be realized based on received signal strength indication (RSSI), fingerprinting, angle of arrival (AoA) and time of flight (ToF) based techniques. Continuous tracking approaches based in WiFi signal detection mainly use the client's MAC-address as explicit identifier in order to recognize and trace a particular device over time. Other technical solutions for navigation services in relation with the real-time tracking are based on environmental measurements, based on barometers, accelerometers and gyrometers present in the mobile device and require a calibration phase. All technical solutions named before, require the installation and execution of an application and/or program on the mobile device. For example, US 2020/0141735 discloses a method for navigating a user in an indoor location, whereas the user interacts during the navigation with a I/O interface, possibly consisting of a web-interface, communicating with a server. Through said interaction, the map of the indoor location, metadata of the indoor location, the signal strength relative to the Beacons present in the indoor area and the metadata of the destination are download on the mobile device through a program (or analogously through an application) installed on the mobile device. Consistent with that and similarly to other methods and solutions for indoor localization, the navigation is executed on the mobile device by running a program (or analogously and application). Therefore, according the method of US 2020/0141735, despite the interaction with a server through a web-interface, the navigation and the data to be processed for executing said navigation are at least partially processed though a program (or analogously an application) installed and running on the mobile device. The step requiring the installation of a program and/or application on the mobile device itself represents a drawback for the wide utilization of indoor navigation services from the users, who need to actively download said program and/or application. Moreover, different indoor navigation solutions or indoor navigation solutions offered by different providers might require different programs and/or applications, meaning that the user might need to download different applications and/or programs for navigating in different locations. From this background, the utilization and acceptance of indoor navigation solutions is quite limited. It would be of advantage to provide the users with an indoor navigation service, which does not require the installation of a program and/or application and can therefore be used easily in different environments. Another difficulty related to indoor navigation and tracking consists of the fact that in most of the real use cases, WiFi-cannot be used for tracking. As already outlined before, the utilization of WiFi for localization would be highly advantageous, because the installation additional hardware infrastructure for the localization is not required. Nonetheless, it is in may cases not possible to use the WiFi-infrastructure for localization purposes. Typically, when executing localization of a mobile device, the localization finds place on the phone itself. The mobile device could in principle be capable of measuring the signal intensity from the WiFi-routers in the surrounding environment and can access the information about their position. Based on this information it could then, for example through multilateration, find its own position in the building. Nonetheless, it is in many cases impossible to execute localization on the phone based on the signal intensity from the WiFi-routers according to the application scheme as explained before. The reason for this is, that in particular in relation to Apple mobile devices (iOS), it is impossible to access from the mobile device the intensity strength of the WiFi-routers (also referred to as Access Points, APs) in the vicinity of the mobile device and the information about their positions in the building. The only possibility for accessing this required information, is to remove the standard utilization constraints from the mobile device ("jailbreak"), which is not recommendable for other reasons. The impossibility of accessing the information about the position of the WiFi-routers inside the building and the signal intensity received from them, typically makes impossible to realize indoor navigation through the WiFi-network. This leads to the fact, that in many applications and use cases the localization is carried on with the aid of some additionally installed hardware infrastructure, despite the disadvantage of requiring additional hardware. It would therefore be particularly advantageous, to realize indoor navigation through the existing hardware infrastructure of the WiFi-network, despite the impossibility of accessing the positions of the WiFi-routers inside the building and their signal strength as measured at the location of the mobile device.

## SUMMARY OF THE INVENTION

The present invention relates to a system and a method for guiding a user carrying a mobile device inside an indoor environment. The navigation data may be displayed in a standard browser application already installed on the mobile device. The navigation data may thus be used without having to download and install a dedicated navigation program/application. The method may be executed by a system comprising a mobile device, a Dynamic Host Configuration Protocol (DHCP) enabled WiFi network and a device capable of tracking the mobile device. The method can be performed based on standard WiFi hardware and in scenarios where the positions of the WiFi-routers and the intensity of the signals received by the mobile device are not readily available to programs/applications on the mobile device. The system may comprise a mobile device, a DHCP server, and a device capable of tracking the mobile device. The devices may be part of a network, possibly a WiFi-network, a network of tracking devices as outlined below, or the combination of said networks, said networks being connected to the DHCP server and to the tracking system. The mobile device might be any portable device capable of streaming and/or emitting electromagnetic waves, preferentially at 2.4 GHz or 5 GHz, and might be a smartphone, a cellular phone, a tablet, a computer, a laptop, etc. A Beacon or an iBeacon (in particular a BLE-Beacon and/or proprietary hardware) could also be used as the mobile device. WiFi-networks are widely provided in public places and typically use DHCP to assign IP addresses to the mobile devices in the network and for compiling a list (the DHCP-listing), where a listing of the IP and MAC addresses of the devices, including mobile devices, connected to the network are provided. The DHCP server might be physically remote from other network nodes. Alternatively, the DHCP server may be one or more of the WiFi routers of the WiFi network. The WiFi routers might be used for tracking, although other devices installed in the indoor environment might be used for the tracking as well, as outlined below. The device capable of tracking the mobile device may be capable of localizing and following the movements of the mobile device and therefore of the user carrying the mobile device inside an indoor environment. In addition to the information about the location of the user carrying the mobile device, the information about the MAC address of the mobile device might also be retrieved by the device capable of tracking the mobile device. Said device capable of tracking the mobile device might be operated based on camera-based visualization and/or tracking, geolocalization, possibly in relation with the application of accelerometers and gyroscopes, Bluetooth technology, Beacon, iBeacon and Bluetooth Low Energy (BLE) Beacon technology, ultrawide band technology, long-term evolution (LTE) technology, WiFi technology, infrared technology, radio frequency (RF) technology, 2G, 3G, 4G, or 5G technology, trilateration and/or multilateration of electromagnetic signals, triangulation of electromagnetic signals, fingerprinting, possibly in relation with WiFi, Channel State Information (CSI) technology, uncertainty radius localization methods, methods based in the Hidden Markov Model, particle filter localization methods, weighted particle filter localization methods. The tracking devices might be antenna devices for tracking the movements of the mobile devices carried by a user and might be any kind of antenna device capable of receiving and/or transmitting electromagnetic waves and might be ultrawide band antennas or devices, long-term evolution (LTE) antennas, WiFi antennas, infrared emitter or sensor, Beacon, iBeacon or Bluetooth Low Energy (BLE) Beacon, radio frequency (RF) devices, 2G, 3G, 4G, or 5G antenna devices and they might be capable for example of receiving, emitting, measuring and/or detecting on or more of the signals listed before and/or be capable of retrieving the signal strength, the angle of arrival, the directionality of an antenna emission, the pattern of an emitting antenna, a RF antenna or in general any other emitting device, the directionality of an antenna and/or of an radiated/detected signal, the signal loss, received signal strength indicator (RSSI), free-space path loss (FSPL), a frequency spectrum, a frequency dependent power spectrum, a time dependent power decay, a path dependent power decay, a distance dependent power decay. The localization may be executed based on the electromagnetic signal streamed from the mobile device and received by a hardware infrastructure (for example the WiFi infrastructure, an infrastructure comprising the tracking devices or of the combination thereof). Therefore, the localization is not executed on the mobile device itself, but by a tracking system external to the mobile device. For this reason, it is not necessary that the mobile device accesses the information about the positions of the WiFi routers and the intensity of the signals received at the position of the mobile device. Once the tracking system has localized the mobile device, the tracking systems may send the information about the position of the mobile device to the mobile device. Said information may be visualized by the mobile device by means of a standard internet browser or analogous application/program, typically already installed on the mobile device. The routing of the information from the tracking system to the mobile device may be based on the IP address of the mobile device, which may be retrieved by the tracking system from the DHCP. In other words, the mobile device may be tracked by the tracking system, irrespective of the intention of the user carrying the mobile device to access to the navigation and the navigation services and irrespective of the intention of sending information from the tracking system to the mobile device. Thus, the mobile device might be constantly tracked and its position might be constantly estimated by the tracking device. When opening an internet browser and sending a request for accessing navigation and navigation services, the user carrying the mobile device might initiate the process executed by the tracking system, said process comprising retrieving the IP address from the DHCP enabled device and routing the information necessary for accessing navigation and navigation services to the mobile device.

**BRIEF DESCRIPTION OF THE DRAWINGS**

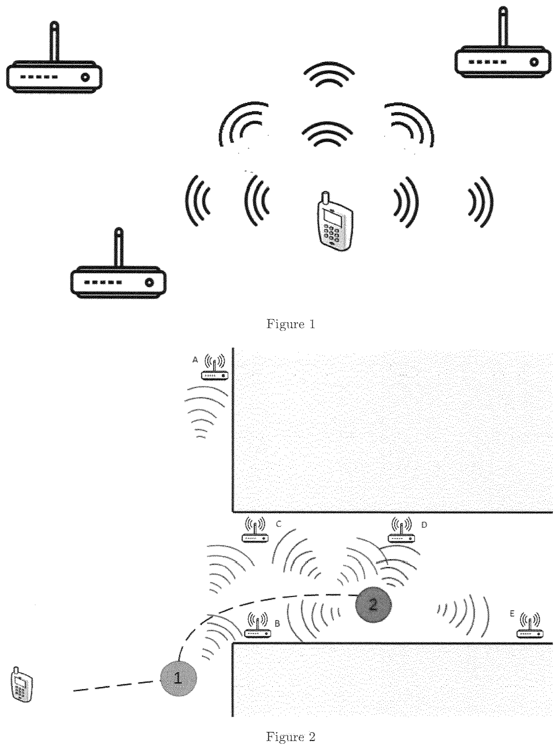

Figure 1 is a graphical representation of a mobile device streaming an electromagnetic signal, which is received by surroundings antenna devices.

Figure 2 is a graphical representation of how the electromagnetic signal streamed by the mobile device can be received by the surroundings antenna devices.

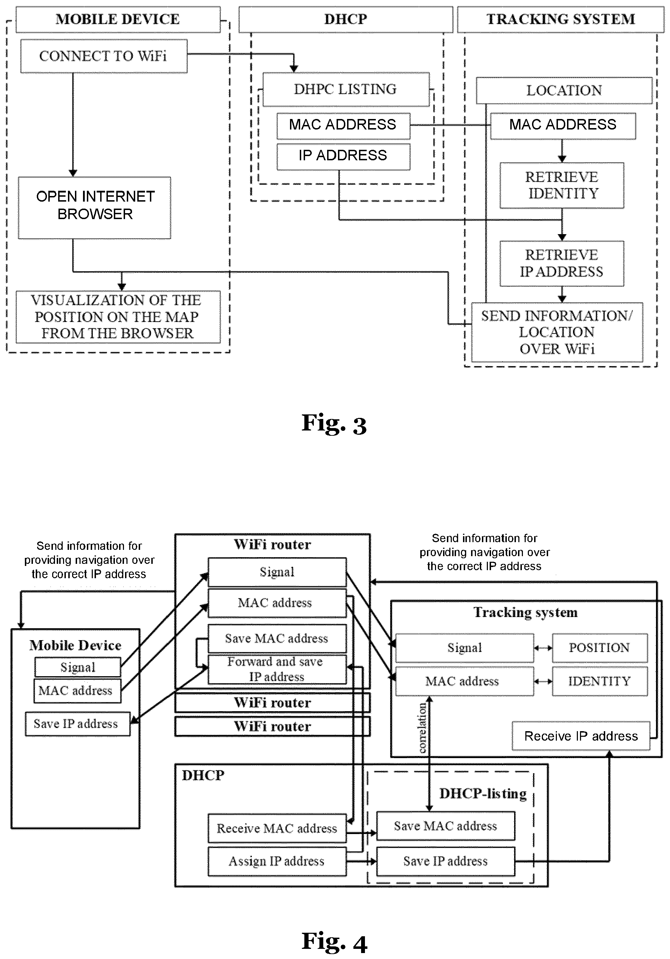

Figure 3 is a schematic representation of one exemplary embodiment of the invention, where navigation services are provided to a user.

Figure 4 is a schematic representation of an exemplary embodiment of the invention, where the tracking system receives the MAC-address and the signal intensity from the WiFi-routers of the WiFi-network and receives the IP-address of the mobile device from the DHCP and sends the information necessary for the navigation through the WiFi-network.

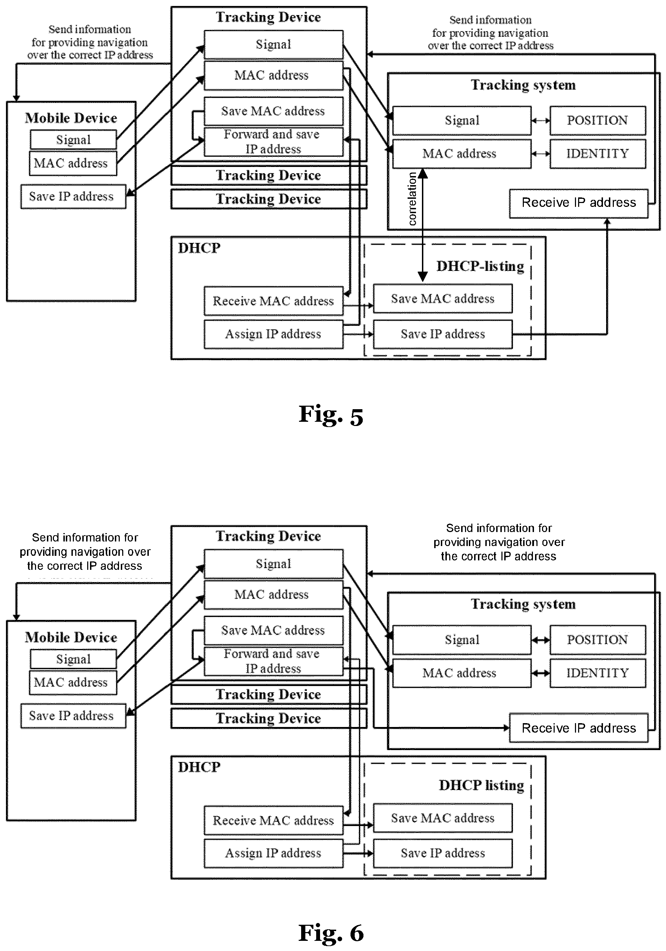

Figure 5 is a schematic representation of an exemplary embodiment of the invention, where the tracking system receives the MAC-address and the signal intensity from the tracking devices and receives the IP-address of the mobile device from the DHCP and sends the information necessary for the navigation through the tracking devices.

Figure 6 is a schematic representation of an exemplary embodiment of the invention, where the tracking system receives the MAC-address and the signal intensity from the tracking devices and receives the IP-address of the mobile device from the tracking devices and sends the information necessary for the navigation through the tracking devices.

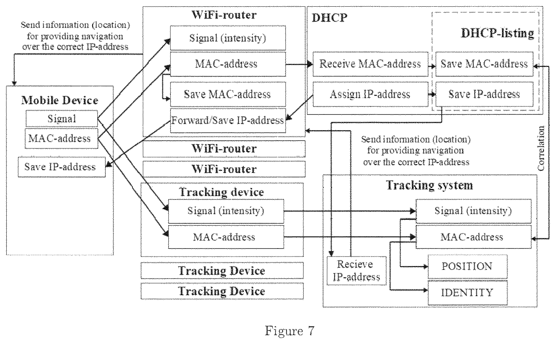

Figure 7 is a schematic representation of an exemplary embodiment of the invention, where the tracking system receives the MAC-address and the signal intensity from the tracking devices of the and receives the IP-address of the mobile device from the DHCP and sends the information necessary for the navigation through the WiFi-network.

**DETAILED DESCRIPTION OF THE PREFERRED EMBODIMENTS**

In the following detailed description various embodiment of the present invention are described. For the purpose of illustration, the various embodiment of the invention are shown as preferred embodiments. It should be understood however, that the invention is not limited to precise arrangements as shown in the drawings and as described in the text in relation to said preferred embodiments. In particular, the embodiments presented in the following might be described with reference to particular steps. When referring to steps, said steps might be presented in the description of the embodiments of the invention in a specific order. It nonetheless to be understood, that all described steps might be executed in any arbitrary order and each of the step is to be seen as optional and might be present only in some specific embodiments of the invention.

Figure 1 represents schematically how the signal from a mobile device can be detected by antenna devices placed in its surroundings. Said antenna devices might be WiFi-routes or any other kind of antenna capable of detecting electromagnetic waves. In particular, the antenna devices might be tuned to especially detect frequencies of electromagnetic fields in the range of the frequencies emitted by typical mobile devices, such as for examples, cellular phones and smartphones. Based on the detection of the signal emitted by the mobile device, the tracking system described herein might be operated based on trilateration of electromagnetic signals, triangulation and multilateration of electromagnetic signals, fingerprinting, methods based on the Hidden Markov Model, uncertainty radius localization methods, particle-filter localization methods, weighted-particle-filter localization methods. Further, the tracking system might be operated based on a method including successive phases, preferentially two phases, more preferentially a training (offline) and a real time localization (on-line) phase. Said method including successive phase might be, without being limited to, a fingerprint method. Additionally or alternatively, Channel State Information (CSI) might be combined with multilateration or fingerprint, said combination being based on recording the amplitude and phase information as explained in detail below. The tracking of the mobile device might be realized based on the estimation of the distance between one or more antennas of the hardware infrastructure present in the building (for example, in the case of the WiFi-network these antenna might be the WiFi-routers) and the mobile device carried by the user. The distance might be obtained by considering the signal attenuation based on the free-space signal loss (FSPL). The signal intensity $I$ at a certain position can be expressed in dependence on the distance $d$ between said position and the position of the emitter, on the initial signal strength $I_0$ and on the signal decay rate $\gamma$ according to:

$$I = I_0 + 10 log_{10}\left(\frac{1}{d}\right)$$

Correspondingly, the distance can be expressed as:

$$d = 10^{\frac{I-I0}{10\gamma}}$$

In a preferred embodiment of the invention, the intensity is measured at the positions of the antenna devices built in the existing infrastructure (for example, the WiFi-routers of the WiFi-infrastructure) and the measured intensity is that of the electromagnetic waves emitted from the mobile device. In other words, the intensity of the signal emitted from the mobile device is measured by the antenna devices mounted in a hardware infrastructure, as for instance the WiFi-network consisting of the WiFi-routers. Knowing the distance between the mobile device and at least three of the antenna devices of the hardware infrastructure of the building, it is possible to locate the mobile device by using trilateration, mathematically:

$$(x_p - x_a)^2 + (y_p - y_a)^2 = d_a^2$$

$$(x_p - x_b)^2 + (y_p - y_b)^2 = d_b^2$$

$$(x_p - x_c)^2 + (y_p - y_c)^2 = d_c^2$$

where $x_p$ and $y_p$ are the coordinates of the mobile device and $x_{a,b,c}$ and $y_{a,b,c}$ are the coordinates of three different antennas of the hardware infrastructure located at three different positions $a$, $b$, and $c$. $d_{a,b,c}$ are the distances between the mobile device and the antenna devices at the positions $a$, $b$ and $c$, The localization accuracy can be further improved by using multilateration. By doing so, the mobile device is located using as reference for measuring the distance more than three antennas of the hardware infrastructure. In this case, the solution to the system of equations is found by non-linear least squares (NLLS), namely:

$$S = \sum_{i=1}^{n}[r_i - d_i]^2$$

where

$$d_i = \sqrt{(x_p - x_i)^2 + (y_p - y_i)^2}$$

With this method, the solution to the system of equations is found through iteration. The initial position for the first iteration is set to be the position found by trilateration using only three antenna devices of the hardware infrastructure. A better estimation for the position is found by running the iteration. In another embodiment of the invention, multilateration might optionally be combined with Channel State Information (CSI). CSI can be obtained from the physical layer of the receiver and provides information on each sub-carrier in the frequency domain. Typically, CSI could only be be extracted from a little number of devices commercially available and could moreover by extracted only after some firmware modifications. Said devices commercially available are typically Intel IWL 5300 and Atheros 802.11n wireless chipsets. More recently, CSI has been made accessibel also by using other devices (for instance, Raspberry Pis). In one embodiment of the present invention, CSI can be used for extracting the direct path signal from the multi-reflections. Indeed, the CSI captures the delay and attenuation of different signal paths. If a transmitter transmits a signal $S_q(t)$, the quality of the received signal at the receiver $R_q(t)$ depends on the CSI, described by an amplitude and a phase as $C_q e^{i\phi_q}$. The received signal is therefore given by:

$$R_q(t) = C_q e^{i\phi_q} * S_q(t) + n(t)$$

where $n(t)$ represents the noise. The suffix $q$ stays for the channel through which the signal is received. The CSI is reported as a matrix of complex numbers representing the channel gain (amplitude) and phase for every sub-carrier and for every transmit-receive antenna pair. By Fourier Transformation, the frequency domain CSI can be translated into the time-domain power-delay profile (PDP). The power-delay profile represents the time dependent intensity profile of the different paths as measured at the receiver. In first approximation, since the direct path traverses the minimum distance among all the received paths, the intensity of the direct path will likely appear in the earliest component of the power-delay profile. CSI allows for accessing very detailed information about the characteristics of the electromagnetic signal, which can potentially increase the positioning precision but is also related to a large amount of data to be processed. Additionally, given the dependence of the signal amplitude and phase on the multireflections, the shape of the CSI-signal is highly environment dependent. For these reasons, CSI might be executed in combination with deep learning and machine learning methods. Besides allowing for processing of a large amount of data, deep learning and machine learning also reduce the noise significantly. Further, data filtering and/or data pre-processing might be performed. Moreover, CSI based methods might further be executed in more successive phases, preferentially two phases whereas a first phase might be a training phase (off-line) and the second phase might be a real time localization phase (on-line). In particular, deep learning and machine learning methods might be used in an off-line phase, where the tracking system might be trained and characteristic features of the environment. Said features might fully or partially be saved and might be utilized in a following phase, the on-line phase, for performing the actual localization of the user carrying the mobile device. CSI measurements can be performed on several devices, in particular without being limited to wireless chipset after firmware modifications. Said devices might be without limitation Intel's IWL 5300, Atheros 802.11n and Raspberry Pis.

In one embodiment of the invention, the localization of the mobile device might be estimated combining the information about its distance to the antennas of the hardware infrastructure (for example, the WiFi-routers of the WiFi-infrastructure), which might be retrieved through multilateration as explained before, and the historical information of the positions of the mobile device, in particular by estimating the velocity at which the mobile device (and therefore te user carrying said mobile device) is moving. In this embodiment of the invention, the localization is initiated by setting certain parameter in dependence of the environment surrounding the mobile device and the user carrying the mobile device. Said parameters might be for instance, without limitation, the minimum and maximum velocity of the user moving. For example, the walking speed of the average person has been estimated to be between 1.21 m/s and 1.40 m/s and varying according to the environment. Then, we also determine the localization history that can be expect to be relevant for new position estimations. In some practical cases, it might sufficient to consider a limited number of historical positions in order to improve the localization accuracy. A number of less than 10 historical position might be taken, preferentially number of 1 or 2 historical positions might be used for improving the position estimation. Successively, an uncertainty is computed as the sum of the distance from the last estimated position and the minimum distance to the nearest antenna of the hardware infrastructure, estimated by using the minimum and maximum expected values of the velocity and the time interval between the two successive position estimations. Successively, it is proven, if the estimated position is within the calculated uncertainty and, if not, it is backtracked to the localization history to find acceptable position estimations and the positions outside the uncertainty interval are considered to be anomalies and therefore rejected. In certain embodiment of the invention, it is more convenient to overestimate the uncertainty interval. This computation allows the radius to dynamically and robustly reflect the error.

In one embodiment of the invention, the position might be estimated by aid of a polygon projection method. Projecting the estimated positions on a map of the indoor environment might improve the localization accuracy. To implement polygon projection, restricted areas of the indoor environment in which the navigation is to find place are excluded. Successively, the rest of the area of the indoor environment is segmented into polygons. After the position of the user carrying the mobile device has been estimated, it is verified if the estimated position is within the boundaries of any of the defined polygons. If it is, then the polygon, which might correspond to a specific area of the indoor environment, as for instance a room, in which the user carrying the mobile device has been located, might be identified as the area in which the user carrying the mobile device is to be located. If the estimated position might be in the excluded area outside the are defined by the polygons, the position of the user carrying the mobile device might projected inside the closest polygon and the user carrying the mobile device is assumed to be located in the area represented by this polygon.

Locating the user carrying the mobile device in specific areas of the indoor environment, said specific areas having been defined for instance by polygon projection as described before, means to add or access semantic information to the navigation. Having access to the semantic information of a localized point not only allows for a possibility of semantic analysis but also makes room for semantic correction. If the position of a user carrying a mobile device estimated by means of either of the methods as described before or by means of any arbitrary combination of them, appears to fluctuate between two rooms in a small time window, it is more likely that the user carrying the mobile device is in either of those rooms. Additionally, if a user carrying a mobile device is detected in two rooms that are not next to each other, it might be expected that the user is actually in one intermediate room between the two. Following from this, in one embodiment of the invention, a Hidden Markov Model (HMM) can be used for improving the estimation of the position of the user carrying the mobile device. Using an HMM and the semantic knowledge of the indoor environment, the physical space can be modeled as an HMM where the rooms and the corridors might the hidden states, and the semantic localization predictions are the observed states. The data about the position estimation collected in the area to fit an HMM, whose transition and emission probabilities reflect the real-life transition and localization patterns. In one embodiment of the invention, the Hidden Markov Model might be used for realizing a semantic correction of the estimated positions of the user carrying the mobile device. For example, the estimated positions of a user carrying the mobile device might be fluctuate between two rooms in a small time window. In this situation, it is possible with a certain probability that the user is in either of these two rooms. Further, if the position of the user carrying the mobile device is repetitively estimated to be in two different rooms, the user might be expected to be detected also in the intermediate corridor. Therefore, using a Hidden Markov Model and the domain knowledge of the area in which the localization estimation finds place, said area can be modeled as a Hidden Markov Model where the rooms, the corridors and the features in general characteristic of the area in which the position estimation must find place might by identified with the hidden states and the semantic localization predictions might be identifies as the observed states. An possible realization scheme for this embodiment of the invention based on a Hidden Markov Model, comprises modelling features and locations inside the area in which the positions estimation must find place as the hidden states and the position estimations as the observed states.

In one embodiment of the invention, the estimation of the position of the user carrying a mobile device might be improved by applying a particle filter and calculated uncertainty radius calculated as explained before, might by used for improving the localization by means of a particle filter. In this embodiment of the invention, a set of particles around the estimated location within the uncertainty radius is generated. By doing so, the probability of getting samples around the true position of the user carrying the mobile device can be increased. After having defined the uncertainty radius and having statistically distributed the particles, polygon projection might be used to remove invalid particles and topology fitting, extracted from the map. Additionally, each particle might be weighted to its position in relation to the available paths and in relation to the estimated velocity of the user carrying the mobile device and the particle with weight above a reasonable threshold. When adding a weight to each particle, it is referred to this method as weighted-particle-filter.

The mobile devices stream electromagnetic signals containing specific information, as extensively explained in relation with Figure 1 and Figure 2. Among the information sent by a mobile device, there might be the information about its MAC-address. The MAC-address is a code typically consisting of 48 bits in hexadecimal language uniquely identifying a mobile device. The information about the MAC-address streamed by the mobile device might be collected by the antenna devices of the hardware infrastructure (for instance, the WiFi-routers of the Wi-Fi network). Therefore, when using said antenna devices for tracking the mobile device, the information about the mobile device is known on the side of the tracking system. As explained in detail below, according to the method of the present invention, the tracking system might exchange information with the DHCP, in order to retrieve also the IP-address of the mobile device. The tracking of the mobile device might be realized in one embodiment of the invention based on mapping the received signal strength indicator (RSSI) in the area in which the user carrying the mobile device is to be positioned. Different locations in a localization space have different but unique RSSI patterns, referred to as "fingerprints". Following from this, it is sometimes referred to the method as described with reference to this embodiment of the invention as "fingerprinting". In one embodiment, RSSI data are collected for different locations inside the area in which the positioning has to find place. Based in this collection, map of the RSSI fingerprints can be constructed. For the purpose of positioning the user carrying the mobile device, the signal detected during the positioning itself might be compared with the map of the RSSI fingerprint previously constructed. The RSSI might be defined as the ratio between the power radiated by a source received at a certain position and the power emitted by the same source. The RSSI might be expressed as:

$$RSSI = \left(\frac{4\pi d}{\lambda}\right)^2$$

where $d$ is the distance between the position of the source and the position at which the power is received and $\lambda$ is the wavelength of the electromagnetic radiation, which power is measured. The RSSI might equivalently be measured in decibels:

$$RSSI(dB) = 20log_{10}(d) + 20log_{10}(\nu) + 20log_{10}\left(\frac{4\pi}{c}\right)$$

The position estimation executed by or in combination with fingerprinting might be carried on in several consecutive phases, preferentially in two consecutive phases. In a first phase, one or more fingerprint vectors is recorded by using an apposite mobile device collecting the signal emitted by the antenna devices present in the environment surrounding the area where the position estimation is to be executed. Each of the fingerprint vectors might be recorded in correspondence of a reference location, whereas said reference location might possibly be characterized by certain specific Cartesian coordinates or analogously by a specific longitude and latitude. During this first phase, a collection of fingerprint vectors each corresponding to a specific reference location might be measured. In one embodiment of the invention, the fingerprint vector $\vec{f_i}$, which might be measured at the physical location $\vec{l}(x_i, y_i)$, might be expressed as:

$$\vec{f_i} = \left\{F_1^i, F_2^i, ..., F_N^i\right\}$$

where $F_j^i$ are the features and $N$ is the number of features of the signal measured at the corresponding reference position $\vec{l}(x_i, y_i)$. The coordinates $(x_i, y_i)$ might be Cartesian coordinates and/or longitude and latitude coordinates. Said fingerprint vector measured in relation with the movements of the mobile device might or might not include the same kind and number of features as the fingerprint vectors measured at the reference positions, whereas it preferentially includes the same kind and number of features of the fingerprint vectors measured at the reference positions. Said features might include, without limitation, the RSSI value, one or more series measurements of the RSSI, the average and standard deviation of one or more series measurements of the RSSI, the time of arrival and strength of the time-dependent intensity. In a second phase, a fingerprint vector might be measured in relation with the movements of a mobile device carried by a user. For the purpose of estimating the position of the user carrying a mobile device, this fingerprint vector is compared with the fingerprint vectors measured during a first phase. The position of the user carrying the mobile device is estimated on the base of this comparison. Said estimation of the position might, in some embodiments of the invention, comprising arithmetical difference, the variance, the Euclidean distance, an arithmetical quantity and/or parameter, a statistical quantity and/or parameter. Additionally or alternatively, said estimation of the position might comprise or be executed in combination with statistical methods, such as for example and without limitation being based on Bayes' probability and/or comprise or be executed in combination with a machine-learning-method, such as for example and without being limited to, a kNN, random forest, or neural network. In one some embodiments of the invention, the fingerprint based positioning might be implemented through a probabilistic method. The probabilistic method might be executed in several consecutive phases, preferentially two phases. During a first phase, a surveyor surveys the area with a phone to collect RSSI fingerprints. In the second phase, the positioning might be executed by using a probabilistic method, possibly based on Bayes' probability, whereas in the execution of said methods it might be sought for a location $l_i$, which maximizes the probability of the user carrying the mobile device of being at the position $l_i$ when a certain RSSI fingerprint is collected. In one embodiment of the invention, the posterior probability $P(l_i|s)$ is computed, whereas $l_i$ is one of the possible locations $l_1, l_2, l_3, ..., l_n$ at which the user carrying the mobile device could be present and $s$ is the vector of the RSSI fingerprint. The most probable user carrying the mobile device might be then estimated to be at the position $l_i$, whereas $l_i$ maximizes the likelihood vector:

$$arg_i max[P(l_i|s)]$$

In another embodiment of the invention, a machine-learning-based fingerprinting method might be used. Said machine-learning-based fingerprinting method might include several phases, possibly two phases. In a first phase, a surveyor might survey the area with a mobile device to collect the data needed to train a classifier, whereas said classifier might be, without being limited to, a kNN, random forest, or neural network. The classifier might be capable of recognizing different fingerprints. In a second phase, the classifier might match the measured RSSI fingerprint with the most similar RSSI fingerprint collected in the previous phase. The estimation of the position is then executed on the base of the similarity between the collected RSSI fingerprint and the vector of the measured RSSI. In some embodiments of the invention, the RSSI fingerprint might comprise a vector including the value of the time-dependent intensity measured during a first phase at the position of the mobile device. Additionally, the intensity measured at the position of the mobile device might comprise a vector including the time-dependent intensity measured during a second phase. The similarity might be calculated for example by subtracting the two vectors measured in the two different phases. When this difference is minimal, the user carrying the mobile device is estimated to be at the position rendering the maximal similarity (therefore the minimal different) between one vector measured in the first phase a second vector measured in the second phase. In some embodiments of the invention, the fingerprinting might make use of patterns encountered in the inertial measurement unit (IMU) data to detect and count steps to estimate the distance and direction in which the user is moving, hence make a more informed prediction about their location. In another embodiment of the invention, fingerprinting might optionally be combined with Channel State Information (CSI). CSI can be obtained from the physical layer of the receiver and provides information on each sub-carrier in the frequency domain. Typically, CSI could only be be extracted from a little number of devices commercially available and could moreover by extracted only after some firmware modifications. Said devices commercially available are typically Intel IWL 5300 and Atheros 802.11n wireless chipsets. More recently, CSI has been made accessibel also by using other devices (for instance, Raspberry Pis). In one embodiment of the present invention, CSI can be used for extracting the direct path signal from the multi-reflections. Indeed, the CSI captures the delay and attenuation of different signal paths. If a transmitter transmits a signal $S_q(t)$, the quality of the received signal at the receiver $R_q(t)$ depends on the CSI, described by an amplitude and a phase as $C_q e^{\phi_q}$. The received signal is therefore given by:

$$R_q(t) = C_q e^{i\phi_q} * S_q(t) + n(t)$$

where $n(t)$ represents the noise. The suffix $q$ stays for the channel through which the signal is received. The CSI is reported as a matrix of complex numbers representing the channel gain (amplitude) and phase for every sub-carrier and for every transmit-receive antenna pair. By Fourier Transformation, the frequency domain CSI can be translated into the time-domain power-delay profile (PDP). The power-delay profile represents the time dependent intensity profile of the different paths as measured at the receiver. In first approximation, since the direct path traverses the minimum distance among all the received paths, the intensity of the direct path will likely appear in the earliest component of the power-delay profile. CSI allows for accessing very detailed information about the characteristics of the electromagnetic signal, which can potentially increase the positioning precision but is also related to a large amount of data to be processed. Additionally, given the dependence of the signal amplitude and phase on the multireflections, the shape of the CSI-signal is highly environment dependent. For these reasons, CSI might be executed in combination with deep learning and machine learning methods. Besides allowing for processing of a large amount of data, deep learning and machine learning also reduce the noise significantly. Further, data filtering and/or data pre-processing might be performed. Moreover, CSI based methods might further be executed in more successive phases, preferentially two phases whereas a first phase might be a training phase (off-line) and the second phase might be a real time localization phase (on-line). In particular, deep learning and machine learning methods might be used in an off-line phase, where the tracking system might be trained and characteristic features of the environment. Said features might fully or partially be saved and might be utilized in a following phase, the on-line phase, for performing the actual localization of the user carrying the mobile device. CSI measurements can be performed on several devices, in particular without being limited to wireless chipset after firmware modifications. Said devices might be without limitation Intel's IWL 5300, Atheros 802.11n and Raspberry Pis.

Besides the portable mobile device and the tracking system, the system of the present invention might comprise a DHCP. The DHCP might be physically present in a server or be included in a WiFi-router of the WiFi-network. The DHCP is typically used in combination with WiFi-networks and is responsible for assigning to all devices connected to the WiFi-network an IP-address and for saving for each of the devices connected to the WiFi-network the MAC-address and the IP-address in the DHCP-listing. The IP address is a code of 32 bits, divided in four sequences of 8 bits. Therefore, the DHCP contains the information about which device (identified by its MAC-address) has been assigned with which IP-address. To reach a device connected to the WiFi-network, it is necessary to know its IP-address. For instance, if some kind of information needs to be send to the device, it is necessary to know the IP-address of the device and said device is reached with said information through its IP-address. When a device connects to the WiFi network, it sends to a WiFi-router (usually the closest) its MAC-address. The WiFi-router will then forward the query to connect and the MAC-address to the DHCP, which saves the MAC-address of the device and assigns to it an IP-address. The assigned IP-address is sent to the WiFi-router, which also retains the information about the MAC-address, and to the device. Once connected to the WiFi-network, the device can communicate and exchange information with other devices connected to the WiFi-network and with devices connected to others WiFi-networks, provided that the two (or more) WiFi-networks are connected with each other. For communicating with another device, a device must retrieve the IP-address of the device is needs to communicate to. IP-addresses of websites can for example be retrieved through the Domain Name System. To directly communicate with a device, this device must somehow provide its IP-address. From the characteristics of the IP-address, every device can recognize if another device it might need to reach, is connected to the same WiFi-network or not. If a device needs to connect to a device belonging to the same WiFi-network, it sends to the WiFi-router the IP-address of the device it needs to connect to and the two devices communicate and exchange information over the two IP-addresses and over the same WiFi-network. If a device connected to a WiFi-network must connect to another device within another WiFi-network, it sends to the WiFi-router it is connected to, its own MAC-address and the IP-address of the device it needs to connect to. From the IP-address and from receiving a query with both MAC- and IP-address, the WiFi-routers knows that the device to reach out to does not belong to the WiFi-network and sends a query to the other WiFi-network it is connected to, looking for the IP-address to be reached. The WiFi-router never forwards the MAC-address of the devices. Another WiFi-router containing the IP-address it is sought for and therefore being connected to the device, which the device which sent the first query aims to connect to, accepts the query of the other WiFi-router and reaches the first WiFi-router which sent the first query through its IP-addresses. Therefore, the two devices can communicate and exchange information over the network and the WiFi-routers.

Referring to the tracking system as described before, when moving in a building where a hardware infrastructure consisting of antenna devices (for example, a WiFi-network) is provided, the mobile device streams in its surroundings electromagnetic waves and its MAC-address. Based on that, the tracking system can localize the mobile device (based on the signal intensity and by means of the localization method as explained before) and be aware of the identity of the mobile device (based on the MAC-address). This situation is represented in Figure 2. When located at "Position 1" the signal streamed by the mobile devices reaches the WiFi-routers A, B, C and D. When located at "Positions 2" the signal streamed by the mobile device reaches the WiFi-routers B, C, D, E. The tracking system can through multilateration locate the mobile device, as explained before. Additionally, the estimation of the position of the mobile device and of the user carrying the mobile device can be improved by uncertainty radius methods, Hidden Markov Model based methods, particle-filter methods, weighted-particle-filter methods. Alternatively or additionally, the localization might be carrying on by deploying one of said methods or by arbitrary combining two or more of said methods. Based on the localization, the movements of the mobile device can be tracked in real-time. The movements can be tracked also in the case the signal streamed by the mobile device reaches the same WiFi-routers in two consecutive positions, because the signal intensity reaching each router will change from one position to the other. The localization might be realized through multilateration as explained before, optionally in combination with uncertainty radius localization methods, Hidden Markov Model based methods, particle-filter localization methods, weighted-particle-filter localization methods or other localization methods. As explained before, the mobile devices also streams the information about its own MAC-address. The information about the identity of the mobile device can therefore be accessed based on the streamed MAC-address. Alternatively, other localizations methods might be used, based for example on fingerprinting and/or CSI and/or consisting of consecutive phases, preferentially two phases, more preferentially a training.phase (on-line) and a real time localization phase (on-line). In Figure 2 the signal from the mobile device and its MAC-address are received from WiFi-routers, as explained before. Additionally, WiFi-routers are capable of accessing the DHCP-listing. Nonetheless, the same method can be equivalently be executed with other antenna devices in spite of the WiFi-routers, provided that said antenna devices are capable of receiving the signal, the signal strength and the MAC-address of the mobile device. Additionally, said antenna devices might also be capable of exchanging information with the DHCP, in order to retrieve the correct IP-address of the mobile device and should also be capable of routing the information necessary for the navigation services to the mobile device, as explained before. Alternatively, the antenna devices deployed by the tracking system might be coupled and/or connected to the WiFi-network, such that the IP-address can be accessed and the routing can be realized through the WiFi-network.

Further, the method of the present invention might navigate the user through an indoor environment. Preferably, the navigation is executed through an internet browser, without the need of installing an apposite application or program on the mobile device. For the purpose of navigation, it is necessary that the tracking system accesses the information about the IP-address of the mobile device. As extensively explained before, the communication and exchange of information with a device connected to a network is possible only if the IP-address of this device is known. According to the method object of this invention, the tracking system might access the information about the IP-address of the device, to which the navigation services should be provided, from the DHCP and/or from one or more of the WiFi-routers. With the information about the IP-address, the tracking system can reach the device to which the navigation services need to be provided and can provide it with the necessary information. Said information might consist, without being limited to, the current position of the mobile device, a map of the building, a map of the building pictorially showing the current position of the device, a map of the building pictorially showing a destination to be reached, a map of the building pictorially showing the path or route to be walked to reached the destination. Said information might be visualized on the mobile device through an internet browser or an analogous application or program. Preferentially, an apposite application or program to be installed on the mobile device is not required for said information to be provided to the mobile device.

In one embodiment of the invention, a tracking and navigation system provides a user carrying a mobile device with the information about his/her current position and the position of the wished destination, allowing for visualizing said position of the user, said wished destination, the route to the destination on a map by opening an internet browser. Figure 3 is an exemplary representation of one embodiment of the invention, related to a tracking system providing a user carrying a mobile device with the information about his/her current position and the position of the wished destination, allowing for visualizing said position of the user, said wished destination, the route to the destination on a map by opening an internet browser. With reference to 3, the left box represents the mobile device carried by the user. According to the representation of Figure 3, the user might connect to a WiFi-network. When connecting to a WiFi-network, a DHCP (represented by the middle box) access the information about the MAC-address of the mobile device and assigns an IP-address to the mobile device. The MAC-address of the mobile device and the IP-address assigned to the mobile device are saved in the DHCP-listing, which might by physically saved on an external server (DHCP-server) and/or on one or more of the WiFi-routers of the WiFi-network. The MAC-address and the IP-address are saved also in the mobile device itself and might be saved in one or more of the WiFi-routers of the WiFi-network. As extensively explained before, the tracking systems obtains the position (location) of the mobile device and the information about its MAC-address from the electromagnetic signal streamed from the mobile device itself. A mobile device can be uniquely identified by the DHCP and the tracking system through its MAC-address. Therefore, when information, in particular the information about the IP-address, is exchanged between the DHCP and the tracking system, it can be made sure with absolute certainty, that the exchanged information is relative to a certain specific mobile device, to which it is intended to provide navigation and/or the navigation services. For the purpose of navigation, it is necessary for the tracking system to know the IP-address of the mobile device. The IP-address of the mobile device is contained in the DHCP-listing. The tracking system might retrieve the IP-address by exchanging this information with the DHCP server and/or with one or more of the WiFi-routers. The MAC-address (which is a unique identifier for the mobile device) is known to both the tracking system and the DHCP, therefore the tracking system can with absolute certainty access the IP-address (which is also unique within the network and while the mobile device is connected to the WiFi-network) corresponding to the mobile device, for which the navigation and the navigation services must be provided. By knowing the IP-address, the tracking system can send to the mobile device the information necessary for providing navigation and the navigation services. Said information might be sent over the WiFi-network, being the mobile device connected to at least one of the WiFi-routers of the WiFi-network and being therefore reachable, given that its IP-address is provided, as extensively explained before. Alternatively, the tracking system might be capable of routing the information necessary for the navigation services directly to the mobile device, without the support of the WiFi-network. For visualizing the information sent by the tracking system, an internet browser or an analogous application of program is opened on the mobile device. The visualized information might consist, without being limited to, the current position of the mobile device, a map of the building, a map of the building pictorially showing the current position of the device, a map of the building pictorially showing a destination to be reached, a map of the building pictorially showing the path or route to be walked to reached the destination. During navigation, the position of the mobile device night be visualized might be constantly updated, being the estimated position of the mobile phone constantly updated.

Figure 4 shown another exemplary embodiment of the invention, a tracking and navigation system provides a user carrying a mobile device with the information about his/her current position and the position of the wished destination, allowing for visualizing said position of the user, said wished destination, the route to the destination on a map by opening an internet browser and whereas, in particular, the WiFi-network is deployed for the localization and the routing. With reference to Figure 4, the mobile device streams an electromagnetic signal within a certain frequency range and its MAC-address. The electromagnetic signal is detected by WiFi-routers by means of its frequency and intensity and its MAC-address is received as well from the WiFi-routers. Although in Figure 4 the process of receiving the signal and the MAC-address and all other following steps and processes of the method of this invention is represented in relation with one single routers, the same processes and steps might be executed in parallel or successively by all of the routers. Alternatively, every WiFi-router of the WiFi-network might be capable of singularly executing the processes and steps described herein. After receiving the MAC-address, one or more WiFi-routers saves the MAC-address and sends to the DHCP a query containing the MAC-address of the mobile device. Upon receipt of said query containing the MAC-address, the DHCP assigns an IP-address to the mobile device and forwards the IP-address to the WiFi-router which sent the query. The MAC-address and the IP-address are saved in the DHCP-listing. The DHPC and the DHCP-listing might be physically located on an external server connected and capable of communicating with the WiFi-network or could be physically located in one or more of the WiFi-routers. The tracking system obtains from the WiFi-routers the signal intensity and the MAC-address. On the base of the signal intensity, the mobile device can be localized, as explained before. For the purpose of sending the information necessary for providing the navigation and navigation services, the tracking system needs the IP-address of the mobile device, to which the navigation and navigation services are to be provided. Based on the common knowledge of the MAC-address, the tracking system can retrieve from the DCHP-listing the IP-address corresponding to the mobile device, to which the navigation and the navigation services are to be provided. Though the IP-address, the tracking system can route the this information to the mobile device, such that the navigation and navigation services can be provided. For visualizing the information sent by the tracking system, an internet browser or an analogous application of program is opened on the mobile device. The visualized information might consist, without being limited to, the current position of the mobile device, a map of the building, a map of the building pictorially showing the current position of the device, a map of the building pictorially showing a destination to be reached, a map of the building pictorially showing the path or route to be walked to reached the destination. During navigation, the position of the mobile device might be visualized and might be constantly updated during navigation, being the position of the mobile phone as estimated by the tracking system constantly updated.

Figure 5 shows another exemplary embodiment of the invention, where a tracking and navigation system provides a user carrying a mobile device with the information about his/her current position and the position of the wished destination, allowing for visualizing said position of the user, said wished destination, the route to the destination on a map by opening an internet browser and whereas, in particular, tracking devices are deployed for the localization and the routing. With reference to Figure 5, the mobile device streams an electromagnetic signal within a certain frequency range and its MAC-address. The electromagnetic signal is detected by tracking devices by means of its frequency and intensity and its MAC-address is received as well from the tracking devices. Said tracking devices might be any kind of device, preferentially antenna devices, which might be capable of receiving and/or transmitting electromagnetic waves and might be ultrawide-band antennas or devices, long-term evolution (LTE) antennas, WiFi antennas, infrared emitter or sensor, Beacon or iBeacon, radio frequency (RF) devices, 2G-, 3G-, 4G-, or 5G-antenna devices. Further, said tracking devices might be capable for example of receiving, emitting, measuring and/or detecting on or more of the signals listed before and/or be capable of retrieving the signal strength, the angle of arrival, the directionality of an antenna emission, the pattern of an emitting antenna, a RF antenna or in general any other emitting device, the directionality of an antenna and/or of an radiated/detected signal, the signal loss, received signal strength indicator (RSSI), free-space path loss (FSPL), a frequency spectrum, a frequency dependent power spectrum, a time dependent power decay, a path dependent power decay, a distance dependent power decay. Although in Figure 5 the process of receiving the signal and the MAC-address and all other following steps and processes of the method of this invention is represented in relation with one single tracking device, the same processes and steps might be executed in parallel or successively by all of the tracking devices. Alternatively, every tracking device might be capable of singularly executing the processes and steps described herein. After receiving the MAC-address, one or more tracking device saves the MAC-address and sends to the DHCP a query containing the MAC-address of the mobile device. Upon receipt of said query containing the MAC-address, the DHCP assigns an IP-address to the, mobile device and forwards the IP-address to the tracking device which sent the query. The MAC-address and the IP-address are saved in the DHCP-listing. The DHPC and the DHCP-listing might be physically located on an external server connected and capable of communicating with the tracking devices and the tracking system or could be physically located in one or more of the WiFi-routers. The tracking system obtains from the tracking devices the signal intensity and the MAC-address. On the base of the signal intensity, the mobile device can be localized, as explained before. For the purpose of sending the information necessary for providing the navigation and navigation services, the tracking system needs the IP-address of the mobile device, to which the navigation and navigation services are to be provided. Based on the common knowledge of the MAC-address, the tracking system can retrieve from the DCHP-listing the IP-address corresponding to the mobile device, to which the navigation and the navigation services are to be provided. Though the IP-address, the tracking system can route the this information to the mobile device, such that the navigation and navigation services can be provided. For visualizing the information sent by the tracking system, an internet browser or an analogous application of program is opened on the mobile device. The visualized information might consist, without being limited to, the current position of the mobile device, a map of the building, a map of the building pictorially showing the current position of the device, a map of the building pictorially showing a destination to be reached, a map of the building pictorially showing the path or route to be walked to reached the destination. During navigation, the position of the mobile device night be visualized might be constantly updated, being the estimated position of the mobile phone constantly updated.

Figure 6 shows another embodiment of the invention, analogous to the embodiment as in Figure 5, with the difference, that the IP-address is not retrieved from the DHCP-listing but is retrieved from the tracking devices directly.

Figure 7 shown another exemplary embodiment of the invention, a tracking and navigation system provides a user carrying a mobile device with the information about his/her current position and the position of the wished destination, allowing for visualizing said position of the user, said wished destination, the route to the destination on a map by opening an internet browser and whereas, in particular, tracking devices and a WiFi-network are deployed for the localization and the routing. With reference to Figure 5, the mobile device streams an electromagnetic signal within a certain frequency range and its MAC-address. The electromagnetic signal is detected by the WiFi-routers and the tracking devices by means of its frequency and intensity and its MAC-address is received as well from the WiFi-routers and from the tracking devices. Said tracking devices might be any kind of device, preferentially an antenna device, which might be capable of receiving and/or transmitting electromagnetic waves and might be ultrawide-band antennas or devices, long-term evolution (LTE) antennas, WiFi antennas, infrared emitter or sensor, Beacon or iBeacon, radio frequency (RF) devices, 2G-, 3G-, 4G-, or 5G-antenna devices. Further, said tracking devices might be capable for example of receiving, emitting, measuring and/or detecting on or more of the signals listed before and/or be capable of retrieving the signal strength, the angle of arrival, the directionality of an antenna emission, the pattern of an emitting antenna, a RF antenna or in general any other emitting device, the directionality of an antenna and/or of an radiated/detected signal, the signal loss, received signal strength indicator (RSSI), free-space path loss (FSPL), a frequency spectrum, a frequency dependent power spectrum, a time dependent power decay, a path dependent power decay, a distance dependent power decay. Although in Figure 7 the process of receiving the signal and the MAC-address and all other following steps and processes of the method of this invention is represented in relation with one single WiFi-router and one single tracking device, the same processes and steps might be executed in parallel or successively by all of the WiFi-routers and tracking devices. Alternatively, every WiFi-router and tracking device might be capable of singularly executing the processes and steps described herein. After receiving the MAC-address, one or more WiFi-routers save the MAC-address and send to the DHCP a query containing the MAC-address of the mobile device. Upon receipt of said query containing the MAC-address, the DHCP assigns an IP-address to the, mobile device and forwards the IP-address to the WiFi-router which sent the query. The MAC-address and the IP-address are saved in the DHCP-listing. The DHPC and the DHCP-listing might be physically located on an external server connected and capable of communicating with the tracking devices and the tracking system or could be physically located in one or more of the WiFi-routers. The tracking system obtains from the tracking devices, which received the signal intensity and the MAC-address streamed by the mobile device analogously to the WiFi-routers, the signal intensity and the MAC-address. On the base of the signal intensity, the mobile device can be localized, as explained before. For the purpose of sending the information necessary for providing the navigation and navigation services, the tracking system needs the IP-address of the mobile device, to which the navigation and navigation services are to be provided. Based on the common knowledge of the MAC-address, the tracking system can retrieve from the DCHP-listing the IP-address corresponding to the mobile device, to which the navigation and the navigation services are to be provided. Though the IP-address, the tracking system can route the this information to the mobile device, such that the navigation and navigation services can be provided. For visualizing the information sent by the tracking system, an internet browser or an analogous application of program is opened on the mobile device. Said routing might be executed through the WiFi-network. The visualized information might consist, without being limited to, the current position of the mobile device, a map of the building, a map of the building pictorially showing the current position of the device, a map of the building pictorially showing a destination to be reached, a map of the building pictorially showing the path or route to be walked to reached the destination. During navigation, the position of the mobile device night be visualized might be constantly updated, being the estimated position of the mobile phone constantly updated.

**Claims**

1. A method for providing navigation services to a user carrying a mobile device, said method comprising:

    assigning an internet protocol, IP, address to the mobile device;
    receiving an electromagnetic signal from the mobile device;
    retrieving, based on the received electromagnetic signal, a media access control, MAC, address of the mobile device;
    determining, based on the received electromagnetic signal, a position of the mobile device;
    combining the MAC address retrieved from the mobile device with the corresponding assigned IP address;
    sending the navigation data to the mobile device by addressing the navigation data to the identified IP address.

2. The method of claim 1, wherein the electromagnetic signal is received by one or more antennas.

3. The method of claim 2, wherein the one or more antennas are WiFi antennas of a WiFi network.

4. The method of claim 2, wherein the one or more antennas are antennas of a 5G network.

5. The method of any one of claims 1 to 4, wherein the position of the mobile device is determined based on multilateration.

6. The method of any of claims 1 to 4, wherein the position of the mobile device is determined based on fingerprinting.

7. The method of any one of claims 1 to 6, wherein the position of the mobile device is determined based on Channel State Information, CSI, data.

8.  The method of any one of claims 1 to 7, wherein the position of the mobile device is determined based on a particle filter and/or a weighted particle filter algorithm.

9.  The method of any of claims 1 to 8, wherein determining the position of the mobile device comprises a training phase and a real-time localization phase.

10. The method of claim 9, wherein at least one of said phases is based on machine learning.

11. The method of any of the claims 1 to 10, wherein the localization is executed in combination with topological and/or semantic information.

12. The method of any one of claims 1 to 11, wherein the navigation data comprises at least one of:

    the position of the mobile device;
    a map of a building;
    a map of the building showing the position of the device;
    a map of the building showing a destination to be reached;
    a map of the building showing a path or route from the position to the destination.

13. The method of any one of claims 1 to 12, further comprising:
    visualizing the navigation data on the mobile device in an internet browser window.

14. A system configured to locate a mobile device, to match a MAC address of the mobile device with an IP address assigned to the mobile device and address navigation data for the mobile device to the assigned IP address.

15. The system o claim 14, wherein the mobile device is configured to visualize the navigation data in an internet browser window of the mobile device.

Figure 1

Figure 2

| MOBILE DEVICE | DHCP | TRACKING SYSTEM |
|---|---|---|

CONNECT TO WiFi

DHPC LISTING

MAC ADDRESS

IP ADDRESS

LOCATION

MAC ADDRESS

OPEN INTERNET
BROWSER

RETRIEVE
IDENTITY

RETRIEVE
IP ADDRESS

VISUALIZATION OF THE
POSITION ON THE MAP
FROM THE BROWSER

SEND INFORMATION/
LOCATION
OVER WiFi

**Fig. 3**

Send information for
providing navigation over
the correct IP address

Send information for
providing navigation over
the correct IP address

**WiFi router**

Signal

MAC address

Save MAC address

Forward and save
IP address

**WiFi router**

**WiFi router**

**Mobile Device**

Signal

MAC address

Save IP address

**Tracking system**

Signal ↔ POSITION

MAC address ↔ IDENTITY

Receive IP address

correlation

**DHCP**

Receive MAC address

Assign IP address

**DHCP-listing**

Save MAC address

Save IP address

**Fig. 4**

Fig. 5

Fig. 6

Figure 7

Europäisches
Patentamt

European
Patent Office

Office européen
des brevets

**EUROPEAN SEARCH REPORT**

Application Number

EP 20 19 5174

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/007516 A1 (GE XIAODONG [CN] ET AL) 4 January 2018 (2018-01-04) * par. 45, 47, 60, 61, 75, 77, 83, 90, 98, 112, 114, 115, 122, 130 * | 1-6,9, 10,12-15 | INV. G01S5/14 G01S5/02 |
| X | US 2007/233899 A1 (ABORN JUSTIN A [US]) 4 October 2007 (2007-10-04) * par. 17-28 * | 1-5,9, 12-15 | ADD. G01S5/00 |
| X | CN 104 936 288 A (HANGZHOU H3C TECH CO LTD) 23 September 2015 (2015-09-23) * fig. 3; par. 34-51 * | 1-5,9, 12-15 | |

TECHNICAL FIELDS
SEARCHED        (IPC)

G01S

~~The present search report has been drawn up for all claims~~

| Place of search | Date of completion of the search | Examiner |
|---|---|---|
| Munich | 23 February 2021 | González Moreno, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&  : member of the same patent family, corresponding
     document

EPO FORM 1503 03.82 (P04C01)

Europäisches
Patentamt

European
Patent Office

Office européen
des brevets

Application Number

EP 20 19 5174

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

[X] None of the further search fees have been paid within the fixed time limit. The present European search report has been drawn up for those parts of the European patent application which relate to the invention first mentioned in the claims, namely claims:

1-6, 9, 10, 12-15

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION**
**SHEET B**

Application Number

EP 20 19 5174

The Search Division considers that the present European patent application does not comply with the requirements of unity of invention and relates to several inventions or groups of inventions, namely:

1. claims: 1-6, 9, 10, 12-15

   Providing navigation services to a user carrying a mobile device with position determination based on multilateration or fingerprinting.

   ---

2. claim: 7

   Providing navigation services to a user carrying a mobile device with position determination using CSI data against multipath.

   ---

3. claim: 8

   Providing navigation services to a user carrying a mobile device with improved position determination based on particle filtering.

   ---

4. claim: 11

   Providing navigation services to a user carrying a mobile device with position determination being corrected by using semantic data.

   ---

## ANNEX TO THE EUROPEAN SEARCH REPORT
## ON EUROPEAN PATENT APPLICATION NO.

EP 20 19 5174

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2021

| Patent document cited in search report | Publication date | Patent family member(s) | Publication date |
|---|---|---|---|
| US 2018007516 A1 | 04-01-2018 | CN 107251623 A<br>EP 3241390 A1<br>JP 2018507588 A<br>US 2018007516 A1<br>WO 2016107726 A1 | 13-10-2017<br>08-11-2017<br>15-03-2018<br>04-01-2018<br>07-07-2016 |
| US 2007233899 A1 | 04-10-2007 | CA 2583611 A1<br>EP 1843524 A1<br>JP 2007282227 A<br>US 2007233899 A1 | 03-10-2007<br>10-10-2007<br>25-10-2007<br>04-10-2007 |
| CN 104936288 A | 23-09-2015 | NONE | |

EPO FORM P0459

For more details about this annex : see Official Journal of the European Patent Office, No. 12/82

## REFERENCES CITED IN THE DESCRIPTION

**Patent documents cited in the description**

- US 20200141735 A